Europäisches Patentamt

European Patent Office

Office européen des brevets

(11) Veröffentlichungsnummer : **0 191 901**
**B1**

(19)

(12) **EUROPÄISCHE PATENTSCHRIFT**

(45) Veröffentlichungstag der Patentschrift :
26.04.89

(21) Anmeldenummer : 85112589.8

(22) Anmeldetag : 04.10.85

(51) Int. Cl.⁴ : **C 04 B 28/02**, C 04 B 28/26 //
(C04B28/02, 14:06, 22:00,
22:06, 22:10,
40:00),(C04B28/26, 7:00,
22:00, 22:06, 22:10, 40:00)

(54) **Spritzbeton.**

(30) Priorität : **27.10.84 DE 3439445**

(43) Veröffentlichungstag der Anmeldung :
**27.08.86 Patentblatt 86/35**

(45) Bekanntmachung des Hinweises auf die Patenterteilung : **26.04.89 Patentblatt 89/17**

(84) Benannte Vertragsstaaten :
**AT BE CH DE FR GB IT LI NL SE**

(56) Entgegenhaltungen :
**EP-A- 0 120 237**
**EP-A- 0 120 812**
**AT-B- 192 838**
**CH-A- 94 177**
**DE-B- 2 130 257**

(73) Patentinhaber : **HÜLS AKTIENGESELLSCHAFT**
**Paul-Baumann-Strasse 1**
**D-4370 Marl 1 (DE)**

(72) Erfinder : **Allemann, Kurt, Dr.**
**Kaisereggstrasse**
**CH-3185 Schmitten RF (CH)**
Erfinder : **Deneke, Klaus, Dr.**
**Im Wiesengrund 54**
**D-5210 Troisdorf (DE)**
Erfinder : **Hass, Hansjürgen, Dr.**
**Telegrafstrasse 27**
**D-5210 Troisdorf (DE)**
Erfinder : **Vogel, Günter**
**Zum Scherbusch 45**
**D-5202 Hennef 41 (DE)**

## Beschreibung

Gegenstand der vorliegenden Erfindung ist ein Spritzbeton, der auch bei einem relativ geringen W/Z-Verhältnis verarbeitungswillig ist, sich gut verspritzen läßt und schnell abbindet und erstarrt. Diese Eigenschaften werden dadurch erreicht, daß dem Spritzbeton definierte Betonverflüssiger und Erstarrungsbeschleuniger vor dem Austritt aus der Spritzdüse zugesetzt sind.

Es ist bekannt, Naßgemische aus Zement, Zuschlägen, Zugabewasser und ggf. Zusätzen, wie in der DIN 18551 angegeben, für das Naßspritzverfahren als Ausgangsmischung einzusetzen. Dieses Naßgemisch gelangt entweder pneumatisch über die Spritzdüse zur Einbaustelle (Dünnstromverfahren) oder es wird hydraulisch zur Spritzdüse gefördert (Dichtstromverfahren), um dort mit Treibluft in einen Dünnstrom verwandelt zu werden. In beiden Fällen ist das zum Einsatz kommende Naßgemisch schon eine bestimmte Zeit, die in der Praxis bis zu 90 Minuten betragen kann, mit dem Anmachwasser in engem Kontakt und hat mit diesem bereits reagiert.

Es ist auch bekannt, einem Spritzbeton Erstarrungsbeschleuniger hinzuzufügen, damit nach dem Verspritzen der Beton möglichst schnell abbindet. Dieser Zusatz erfolgt möglichst kurz vor dem Verspritzen, vorzugsweise direkt beim Einsatz an der Einbaustelle. Als Erstarrungsbeschleuniger sind u. a. konzentrierte Lösungen von Alkalialuminaten, Alkalihydroxiden und Alkalicarbonaten bekannt, wie sie z. B. in der DE-OS 33 06 448 beschrieben sind. Die dort genannten Erstarrungsbeschleuniger entfalten ihre volle Wirkung dann, wenn sie zusammen mit dem Zugabewasser gemäß DIN 18551 (im Folgenden auch Anmachwasser genannt) im Trockenspritzverfahren dem Trokkenspritzbeton zugegeben werden. Nur dann wirken sie im Anmachwasser an der Spritzdüse unmittelbar an der Einbaustelle des Spritzbetons spontan auf das Bindemittel im Sinne einer beschleunigten Erstarrung. Wenn der Spritzbeton jedoch schon längere Zeit mit dem Anmachwasser vermischt war und damit bereits reagiert hat, wie dies beim Naßspritzverfahren der Fall ist, dann können die in der DE-OS 33 06 448 beschriebenen Erstarrungsbeschleuniger nicht mehr ihre optimale Wirkung entfalten.

Der alleinige Einsatz von flüssigen Erstarrungsbeschleunigern im Naßspritzverfahren kann dazu führen, daß die Konsistenz des Spritzbetons nach Austritt aus der Düse zu gering ist, so daß besonders an senkrechten Wänden und über Kopf der aufgespritzte Beton ungenügend haftet. Eine Erhöhung der Konsistenz des Spritzbetons durch Zugabe geringerer Mengen an Anmachwasser zur Vermeidung dieses Nachteils verbietet sich, weil dieser dann nicht mehr förder- oder pumpbar ist, so daß versucht werden muß, diesen Nachteil anders zu umgehen.

Eine bekannte Lösung der Förderung von Spritzbeton mit einem geringeren W/Z-Verhältnis besteht darin, diesem an sich bekannte Betonverflüssiger zuzusetzen. Diese Zusätze erhöhen zwar die Förder- und Verarbeitungswilligkeit von Frischbeton, vermindern jedoch die Wirkung von vielen üblichen Erstarrungsbeschleunigern. So wird beispielsweise die erstarrungsbeschleunigende Wirkung der in der DE-OS 33 06 448 genannten Erstarrungsbeschleuniger auf Kaliumaluminatbasis durch die bekannten Betonverflüssiger auf Basis von alkalisch oder neutral eingestellten Salzen von technisch ungereinigten Ligninsulfonaten teilweise oder auch ganz aufgehoben. Dieser Nachteil wird dadurch umgangen, daß man bekannte Betonverflüssiger in Verbindung mit Natronwasserglas einsetzt. Letzteres muß dabei jedoch in Mengen zwischen 10 und 15 %, bezogen auf den Zement, angewendet werden, um ein ausreichendes Erstarrungsverhalten zu erreichen. Diese Mengen haben aber wiederum den Nachteil, daß darunter die Festigkeit des erstarrten Betons leidet. Der Festigkeitsverlust kann dabei bis zu 50 % und mehr betragen.

Es bestand deshalb die Aufgabe, ein Spritzbetonverflüssigungs- und -verfestigungssystem aufzufinden, das es ermöglicht, den Spritzbeton bei möglichst geringen W/Z-Werten verarbeitungswillig zu erhalten, damit er in den Spritzanlagen gut gefördert werden kann, und gleichzeitig nach Verlassen der Spritzdüse ein möglichst schnelles Verfestigen, Erstarren und Erhärten des Betons zu bewirken. Der in dem System enthaltene Verflüssiger darf also die Wirkung des Beschleunigers nicht negativ beeinflussen.

In Erfüllung dieser Aufgabe wurde nun ein Spritzbeton unter Mitverwendung von Betonverflüssigern und Erstarrungsbeschleunigern gefunden, der dadurch gekennzeichnet, ist, daß er als Betonverflüssiger eine oder mehrere Verbindungen aus der Klasse der Naphthalinsulfonsäure-Formaldehyd-Kondensate und als Erstarrungsbeschleuniger hochkonzentrierte wäßrig-alkalische Lösungen von Kaliumaluminat, Kalilauge und Kaliumcarbonat enthält.

Ein solcher Spritzbeton ist besonders verarbeitungswillig und läßt sich in den bekannten Betonspritzeinrichtungen gut fördern, bleibt an senkrechten Wänden und über Kopf gut haften, ohne abzulaufen oder abzufallen, und erstarrt schnell zu einer festen Masse mit hoher Endfestigkeit. Verarbeitungswillig im Sinne der Erfindung bedeutet dabei, daß der Beton zum Fördern und Einbringen ein nach Maßgabe der Konsistenz korrelierendes Ausbreitmaß von mindestens 45 cm aufweist, d. h., daß er den bekannten gegebenen Arbeitsbedingungen angepaßt ist, ohne daß Betriebsstörungen, die auf der Zusammensetzung basieren, auftreten.

Die Wirkung der genannten Zusätze kann noch weiter dadurch verbessert werden, daß der Spritzbeton zusätzlich noch Silikat-Systeme, wie fein verteiltes oder hochdisperses $SiO_2$ oder wasserlösliche Alkalisilikate in Mengen bis zu 3,0 Gew.-% enthält. Vorzugsweise liegt der Zusatz der Alkalisilikate zwischen 0,25 und 2,0 Gew.-%. Das $SiO_2$ kann vorzugsweise bis zu 2,5 %, je nach $SiO_2$-Gehalt oder

Dispersität, eingesetzt werden. Ein Spritzbeton mit diesen zusätzlichen Bestandteilen kann auch bei Temperaturen unterhalb von + 15 °C eingesetzt werden. Dies ist bei den bekannten Spritzbeton-Abmischungen, die Natronwasserglas in Mengen von etwa 10,0 bis 12,0 Gew.-% enthalten, nicht möglich, da sich die hohe Viskosität des Natronwasserglases bei diesen Temperaturen beim Einsatz größer Mengen ungünstig auswirkt.

Aufgrund der genannten Zusätze kann der erfindungsgemäße Naßspritzbeton ein W/Z-Verhältnis von etwa 0,44 bis 0,55 besitzen ; vorzugsweise liegt dieses Verhältnis zwischen 0,45 und 0,47.

Die Betonverflüssiger auf Basis von Naphthalinsulfonsäure-Formaldehyd-Kondensaten sind an sich bekannte Substanzen, die als Dispergiermittel für Pigmente und Gerbmittel eingesetzt werden. Sie werden durch Kondensation der entsprechenden Naphthalinsulfonsäuren mit Formaldehyd hergestellt und ggf. in wäßrigen Lösungen mit Laugen neutralisiert. Sie werden auch als Naphthalinsulfonsäure-Kondensate mit Formaldehyd bezeichnet (vgl. Ullmann « Encyclopädie der techn. Chemie », 3. Auflage, Band 17, Seite 80). Ihr Einsatz als Betonverflüssiger ist z. B. in der DE-C2-28 46 966 beschrieben.

Dort dienen diese Substanzen aber nur zur Verflüssigung des Systems und werden nicht in Kombination mit Erstarrungsbeschleunigern eingesetzt.

Im Gegensatz zu anderen Betonverflüssigern, z. B. solchen auf Basis von Ligninsulfonaten, behindern sie nicht die Wirkung von Erstarrungsbeschleunigern gemäß der Lehre der DE-OS 33 06 448 : im Gegenteil, sie bilden mit diesen Erstarrungsbeschleunigern ein synergistisches System, das außerordentlich kurze Erstarrungszeiten und eine sehr gute Festigkeitsentwicklung des Spritzbetons bewirkt.

Die Zusatzmenge der Betonverflüssiger liegt in der gleichen Größenordnung wie bei den bekannten Systemen. Im allgemeinen genügen Mengen zwischen 0,2 und 3,0 Gew.-%, bezogen auf den Bindemittelanteil des Spritzbetons.

Die in der Praxis einzusetzenden Mengen des Betonverflüssigers hängen u. a. von dem W/Z-Verhältnis des Naßgemisches, dessen Zusammensetzung und den eingesetzten Verbindungen ab. Die optimale Menge muß deshalb in Vorversuchen ermittelt werden.

Die erfindungsgemäß eingesetzten Betonerstarrungsbeschleuniger sind in ihrem grundsätzlichen Aufbau in der DE-OS 33 06 448 beschrieben. Auf dieses Schutzrecht wird hiermit besonders verwiesen. Es handelt sich bei den erfindungsgemäß eingesetzten Substanzen um konzentrierte alkalische Lösungen von Kaliumcarbonat und Kaliumaluminat in Wasser mit überschüssigem KOH-Gehalt. Der Kaliumcarbonat- und KOH-Gehalt kann jedoch höher als dort angegeben sein ; das molare Verhältnis des nicht als Kaliumcarbonat gebundenen $K_2O : Al_2O_3$ kann zwischen 1,1 und 1,6 liegen und der Gehalt an Kaliumcarbonat kann zwischen 0,1 und 6 Mol% betragen. Außerdem kann die Verdünnung größer sein und das molare Verhältnis $H_2O : Al_2O_3$ zwischen 9,5 und 30 betragen. Erfindungsgemäß werden sie jedoch nicht, wie in der DE-OS 33 06 448 beschrieben, dem Anmachwasser zugesetzt, sondern dem Naßgemisch. Ihr Anteil in dem Spritzbeton kann etwas größer sein als in der genannten DE-OS angegeben. Er liegt im allgemeinen zwischen 2,0 und 5,0 Gew.-%, bezogen auf den Bindemittelanteil in dem Spritzbeton. Die optimale Wirkung ist u. a. von der Art und Menge des eingesetzten Betonverflüssigers sowie von den rheologischen Eigenschaften des jeweiligen Naßgemisches abhängig.

Die erfindungsgemäßen Zusatzmittel werden dem Frischbeton vorzugsweise direkt auf der Baustelle zugegeben. Der Zusatz erfolgt dabei zweckmäßigerweise direkt vor dem Verspritzen mittels an sich bekannter, geeigneter Zuführvorrichtungen. Dabei werden die Betonverflüssigungsmittel möglichst unmittelbar von dem Einleiten des Frischbetons in das Dichtstromförderungssystem eingemischt, während die Betonerstarrungsbeschleuniger erst am Ende des Dichtstromförderungssystems, vorzugsweise vor oder innerhalb der Spritzdüse, zugeführt werden.

Als wasserlösliche Alkalisilikate werden die an sich bekannten Natrium- und Kaliumsilikate eingesetzt, die auch als Natron- oder Kaliwassergläser bekannt sind. Der Zusatz dieser Produkte kann sowohl zusammen mit den Betonverflüssigern als auch vor oder nach der Zugabe der Erstarrungsbeschleunigern erfolgen. Die zuerst genannte Variante ermöglicht auf einfache Weise eine homogene Verteilung dieser Stoffe. Bei gleichzeitiger Zugabe von Betonverflüssiger und Alkalisilikat ist jedoch die synergistische Wirkung mit dem Erstarrungsbeschleuniger geringer als bei der Zugabe der Silikate in den Dünnstrom. Bei Zugabe zum Dünnstrom entfaltet das Alkalisilikat seine höchste Wirksamkeit. Dabei muß aber sichergestellt sein, daß die relativ geringe Menge genau dosiert und im Dünnstrom gut verteilt vorliegt. Anstelle von Alkalisilikat kann auch die oben genannte hochdisperse Kieselsäure ($SiO_2$) zudosiert werden.

Das Einmischen der erfindungsgemäßen Komponenten in den Dünnstrom erfolgt durch an sich bekannte Maßnahmen, wie z. B. Eindüsen oder Zerstäuben, mittels bekannter Vorrichtungen.

### Beispiele

Es wurde Frischmörtel aus drei Teilen Normsand entsprechend DIN 1164, Teil 7, und einem Teil handelsüblichem Portlandzement PZ-35F mit einem Wasser-Zementwert von W/Z = 0,52 zubereitet. Alle Komponenten hatten Raumtemperatur (etwa 21 °C) oder waren auf etwa 10 °C vorgekühlt. Bei diesen Temperaturen wurden die Frischmörtel jeweils 30 Minuten vorgelagert. Dann wurden in jeweils gleichen Probemengen die in Tabelle 1 und Tabelle 2 genannten Additive nach Ablauf der dort genannten Zeiten eingemischt.

Die Prüfung des Erstarrungsverlaufes erfolgte mittels eines Konus nach DIN 1168 mit einer Prüflast von 270 g, wobei im Minutenabstand die abnehmende Eindringtiefe registriert wurde. Diese Eindringtiefe, die ein Maß für die Abbindegeschwindigkeit ist, wird in der Tabelle 1 als Konuseindringtiefe bezeichnet. Weiterhin steht in der Tabelle 1

A für einen Betonverflüssiger auf der Basis von Naphthalinsulfonsäure-Formaldehyd-Kondensat als 40 %ige Lösung. Dosierung : 0,5 Gew.-%, bezogen auf den Zement ;

B für Alkalisilikatlösung als 35 %ige Lösung, eingesetzt mit 1,0 Gew.-%, bezogen auf den Zementgehalt, und

C für einen Betonerstarrungsbeschleuniger aus Kaliumaluminat, Kaliumhydroxyd und Kaliumcarbonat entsprechend der Lehre der DE-OS 33 06 448 in etwa 50 %-iger Lösung und einer Dosierung von 3,0 Gew.-%, bezogen auf den Zement.

In der letzten Spalte der Tabelle 1 sind Ausbreitmaße $a_{15}$ von Frischbetonen aufgeführt. Verglichen werden O-Betone (Beispiel 1 und 4) mit Frischbetonen, denen 30 Minuten nach ihrer Zubereitung die erfindungsgemäßen Zusatzmittel A und B einzeln und kombiniert beigemischt wurden. Die Messungen fanden bei den in der Tabelle 1 angegebenen Temperaturen statt. Die größeren Ausbreitmaße sind ein Hinweis auf die bessere Verarbeitbarkeit der Frischbetone.

Der stoffliche Aufbau der Prüfbetone entsprach den « Zusatzmittel-Richtlinien ».

(Siehe Tabelle 1 Seite 5 f.)

Tabelle 1

| Beispiel Nr. | T [°C] | Additivzugabe nach 30' | nach 45' | Konuseindringtiefe [mm] 1 [min] | 2 [min] | 3 [min] | 4 [min] | 5 [min] | 6 [min] | Ausbreitmaß a 15/15 [cm] |
|---|---|---|---|---|---|---|---|---|---|---|
| 1 | 10 | – | C | > 40 | 20 | 14 | 8 | 8 | 4 | 43,4 |
| 2 | 10 | A | C | 35 | 16 | 14 | 9 | 9 | 8 | 52,2 |
| 3 | 10 | A+B | C | 31 | 18 | 8 | 6 | 3 | 1 | 47,2 |
| 4 | 20 | – | C | 24 | 12 | 7 | 5 | 5 | 2 | 44,2 |
| 5 | 20 | A | C | 22 | 11 | 8 | 6 | 5 | 2 | 56,6 |
| 6 | 20 | A+B | C | 20 | 8 | 6 | 3 | 2 | 0 | 49,2 |
| 7 | 20 | B | C | 15 | 8 | 3 | 3 | 1 | 0 | 42,8 |
| 8 | 20 | A | C+B | 10 | 2 | 0 | 0 | 0 | 0 | 56,6 |

EP 0 191 901 B1

Die Beispiele 1, 4 und 7 sind Vergleichsbeispiele, die eine nicht erfindungsgemäße Zusammensetzung hinsichtlich der Zusatzmittel aufweisen. Bei ihnen ist entweder das Ausbreitmaß $a_{15}$ zu gering oder zusätzlich noch das Ansteifungsverhalten ungenügend. Obwohl das Beispiel 7 ein gutes Ansteifungsverhalten zeigt, erfüllt es mit einem Ausbreitmaß $a_{15}$ von 42,8 cm nicht die Anforderungen, die an das rheologische Verhalten eines entsprechenden Frischbetons bei Übergabe an das Dichtstromfördersystem gestellt werden : gefordert wird in der Regel ein Ausbreitmaß $a_{15}$ von wenigstens 45 cm. Naßgemische mit einem geringeren Ausbreitmaß $a_{15}$ sollen in einem Dichtstromfördersystem nicht eingesetzt werden.

Die Forderung nach einem ausreichenden Ausbreitmaß $a_{15}$ von wenigstens 45 cm erfüllen die Gemische der Beispiele 2, 3, 5, 6 und 8. Die Beispiele 3 und 6 zeigen dabei sehr gut die synergistische Wirkung der Zusätze A und B, insbesondere im Hinblick auf das Ansteifungsverhalten.

Wie schon oben angeführt, bringt die Dosierung von B nach C im Dünnstrom den bei weitem stärksten Effekt. Nach dem gewählten Prüfverfahren ist aufgrund der äußerst kurzen Erstarrungszeit ein relevanter Prüfkörper nur schwierig darstellbar. Der technische Einsatz dieser Dosierungsvariante stellt damit hohe Anforderungen an das Dosierungssystem für B in der Dünnstromphase beim Spritzbetonieren. Es muß dabei auch sichergestellt sein, daß das kaum noch plastische Spritzgut beim Auftragen ausreichend verdichtet wird und der Rückprall in vertretbaren Grenzen bleibt.

In einer weiteren vergleichenden Prüfung der erfindungsgemäßen Zusatzmittel entsprechend den Beispielen 4 bis 6 der Tabelle 1 wurde das Erstarrungsverhalten E der Prüfmörtel mit der Vicat-Nadel (DIN 1164, Teil 5) gemessen. Die Naßmörtel waren abweichend von denen der Tabelle 1 mit einem W/Z-Wert von 0,50 entsprechend DIN 1164, Teil 7, zubereitet. Die Prüfungstemperatur betrug 20 °C wie bei den Beispielen 4 bis 7 der Tabelle 1.

Mit $E_B$ wird der Erstarrungsbeginn und mit $E_E$ das Erstarrungsende bezeichnet.

Tabelle 2

| Nr. | T [°C] | Additivzugabe nach 30' | nach 45' | $E_B$ | $E_E$ |
|---|---|---|---|---|---|
| 4a | 20 | – | C | 1'30'' | 4'30'' |
| 5a | 20 | A | C | 1'15'' | 3'30'' |
| 6a | 20 | A+B | C | 1'15'' | 3'15'' |

Nach gleichem Prüfverfahren wurde schließlich noch das Beispiel 8 der Tabelle 1 variiert in der Weise, daß vom Zusatzmittel Alkalipolysilikat (B) Dosierungen von 0,25 ; 0,5 ; 1,0 und 1,5 %, bezogen auf den Portlandzement, angewendet wurden. Dabei zeigte sich, daß die schon beschriebene spontane Wirkung der Zusatzmittelkombination bereits bei einer Dosierung von 0,25 % eintrat. Der Effekt war schon in der Mischphase bei der Aufbereitung der Proben nach 20 bis 40 Sekunden, ab Zugabe von C gerechnet, zu beobachten.

**Patentansprüche** (für die Vertragsstaaten : BE, CH, DE, FR, GB, IT, LI, NL, SE)

1. Verarbeitungswilliger Spritzbeton mit Zusätzen von Erstarrungsbeschleunigern und Betonverflüssigern, dadurch gekennzeichnet, daß er als Betonverflüssiger eine oder mehrere Verbindungen aus der Klasse der Naphthalinsulfonsäure-Formaldehyd-Kondensate und als Erstarrungsbeschleuniger hochkonzentrierte, wäßrig-alkalische Lösungen von Kaliumaluminat, Kalilauge und Kaliumcarbonat enthält, deren Zusammensetzung folgenden Bedingungen entspricht :

a) Das molare Verhältnis des nicht als Kaliumcarbonat gebundenen $K_2O : Al_2O_3$ liegt zwischen 1,1 und 1,6 ;

b) der Gehalt an Verdünnungswasser ist so bemessen, daß das molare Verhältnis $H_2O : Al_2O_3$ zwischen 9,5 und 30 liegt ;

c) der Gehalt an Kaliumcarbonat beträgt zwischen 0,1 und 6 Mol.-%.

2. Spritzbeton gemäß Anspruch 1, dadurch gekennzeichnet, daß die wäßrig-alkalische Lösung von Kaliumaluminat, Kalilauge und Kaliumcarbonat

a) ein molares Verhältnis des nicht als Kaliumcarbonat gebundenen $K_2O : Al_2O_3$ von 1,15 bis 1,45,

b) einen Gehalt an Verdünnungswasser im molaren Verhältnis $H_2O : Al_2O_3$ zwischen 11 und 25 und

c) einen Gehalt an $K_2CO_3$ von 0,1 bis 5 Mol-% besitzt.

3. Spritzbeton gemäß Anspruch 1 oder 2, dadurch gekennzeichnet, daß er den Erstarrungsbeschleuniger in Mengen zwischen 2,0 und 5,0 Gew.-%, bezogen auf den Bindemittelgehalt, enthält.

4. Spritzbeton gemäß einem der Ansprüche 1 bis 3, dadurch gekennzeichnet, daß er den Betonverflüssiger in Mengen zwischen 0,2 und 3,0 Gew.-%, bezogen auf den Bindemittelgehalt, enthält.

5. Spritzbeton gemäß einem der Ansprüche 1 bis 4, dadurch gekennzeichnet, daß er ein W/Z-Verhältnis zwischen 0,44 und 0,55 aufweist.

6. Spritzbeton gemäß einem der Ansprüche 1 bis 5, dadurch gekennzeichnet, daß er zusätzlich noch bis zu 3,0 Gew.-% an Alkalisilikaten oder hochdispersem $SiO_2$ enthält.

7. Verfahren zur Herstellung von Spritzbeton gemäß einem der Ansprüche 1 bis 6 durch Eindüsen oder Einblasen der Zusatzstoffe in ein Pump- und Spritzsystem einer am Einsatzort des Spritzbetons vorgesehenen Betonspritzapparatur, dadurch gekennzeichnet, daß der Betonverflüssiger vor der Förderleitung und der Erstarrungsbeschleuniger nach dem Ende der Förderleitung vor oder innerhalb der Spritzdüse in die Apparatur eingegeben wird.

**Patentanspruch** (für den Vertragsstaat AT)

Verfahren zur Herstellung von verarbeitungswilligem Spritzbeton durch Einblasen oder Eindüsen von Betonverflüssigern und Erstarrungsbeschleunigern in ein Pump- und Spritzsystem einer am Einsatzort vorgesehenen, die Betonmischung einschließlich bekannter Zuschlagstoffe enthaltenden Betonspritzapparatur, dadurch gekennzeichnet, daß man die als Betonverflüssiger einzusetzenden Naphthalinsulfonsäure-Formaldehyd-Kondensate vor der Förderleitung und den Erstarrungsbeschleuniger nach dem Ende der Förderleitung vor oder innerhalb der Spritzdüse in die Apparatur eingibt, wobei als Erstarrungsbeschleuniger hoch konzentrierte wäßrigalkalische Lösungen von Kaliumaluminat, Kaliumhydroxid und Kaliumcarbonat eingesetzt werden, die folgende Bedingungen erfüllen :

a) das molare Verhältnis des nicht an Kaliumcarbonat gebundenen $K_2O$ und $Al_2O_3$ liegt zwischen 1,1 und 1,6,

b) der Gehalt an Wasser als Lösungsmittel ist so bemessen, daß das molare Verhältnis $H_2O : Al_2O_3$ zwischen 9,5 und 30 beträgt, und

c) der Gehalt an Kaliumcarbonat liegt zwischen 0,1 und 6,0 Mol%.

**Claims** (for the Contracting States : BE, CH, DE, FR, GB, IT, LI, NL, SE)

1. Ready for working gunite with additions of setting accelerators and concrete thinners, characterised in that it contains one or several compounds from the class of naphthalene sulphonic acid-formaldehyde condensates as concrete thinner and highly concentrated aqueous-alkaline solutions of potassium aluminate, potassium hydroxide and potassium carbonate as setting accelerator, the composition of the latter meeting the following requirements :

a) the molar ratio of the $K_2O$ (not bound as potassium carbonate) : $Al_2O_3$ lies between 1.1 and 1.6 ;

b) the diluting water content is so measured that the molar ratio $H_2O : Al_2O_3$ lies between 9.5 and 30 ;

c) the potassium carbonate content amounts to between 0.1 and 6 mol%.

2. Gunite according to claim 1, characterised in that the aqueous-alkaline solution of potassium aluminate, potassium hydroxide and potassium carbonate possesses

a) a molar ratio of $K_2O$ (not bound as potassium carbonate) : $Al_2O_3$ of 1.15 to 1.45,

b) a diluting water content in the molar ratio $H_2O : Al_2O_3$ between 11 and 25 and

c) a $K_2CO_3$ content of 0.1 to 5 mol%.

3. Gunite according to claim 1 or 2, characterised in that it contains the setting accelerator in amounts between 2.0 and 5.0 % by weight related to the content of binder.

4. Gunite according to one of claims 1 to 3, characterised in that it contains the concrete thinner in amounts between 0.2 and 3.0 % by weight related to the content of binder.

5. Gunite according to one of claims 1 to 4, characterised in that it possesses a W/C ratio between 0.44 and 0.55.

6. Gunite according to one of claims 1 to 5, characterised in that it contains, in addition, up to 3.0 % by weight of alkali silicates or highly dispersed $SiO_2$.

7. Process for the production of gunite according to one of claims 1 to 6 by injecting or blowing of the additives into a pump and spraying system of a gunite apparatus provided at the location of use of the gunite, characterised in that the concrete thinner is introduced into the apparatus before the feed duct and the solidification accelerator is introduced into the apparatus after the end of the feed duct, before or within the spraying nozzle.

**Claim** (for the Contracting State AT)

Process for the production of ready for working gunite by blowing or injecting of concrete thinners and solidification accelerators into a pumping and spraying system of a gunite apparatus provided at the location of use, the gunite apparatus containing the concrete mixture inclusive of known additives, characterised in that naphthalene sulphonic acid-formaldehyde condensates are supplied to the apparatus as concrete thinners before the supply duct and the setting accelerator is supplied to the apparatus after the end of the supply duct, before or within the spraying nozzle, with there being employed as setting accelerator highly concentrated aqueous alkaline solutions of potassium aluminate, potassium hydroxide and potassium carbonate, which fulfil the following requirements :

a) the molar ratio of the $K_2O$ not bound as potassium carbonate and $Al_2O_3$ lies between 1.1 and 1.6,

b) the content of water as diluent is so measured that the molar ratio $H_2O : Al_2O_3$ lies between 9.5 and 30, and

c) the potassium carbonate content lies between 0.1 and 6.0 mol%.

**Revendications** (pour les Etats contractants : BE, CH, DE, FR, GB, IT, LI, NL, SE)

1. Béton à projeter, ou gunite, ouvrable comportant comme additif des accélérateurs de la prise et des fluidifiants du béton, caractérisé en ce qu'il contient comme fluidifiants un ou plusieurs composés de la classe des produits de condensation acide naphtalène sulfonique/formaldéhyde et, comme accélérateurs de la prise, des solutions alcalines aqueuses fortement concentrées d'aluminate de potassium, de lessive de soude et de carbonate de potassium, dont la composition répond aux conditions suivantes :

a) le rapport molaire du $K_2O$, non lié sous forme de carbonate de potassium, à $Al_2O_3$ se situe entre 1,1 et 1,6 ;

b) la teneur en eau de dilution est mesurée de façon que le rapport molaire $H_2O : Al_2O_3$ se situe entre 9,5 et 30 ;

c) la teneur en carbonate de potassium se situe entre 0,1 et 6 moles %.

2. Béton à projeter selon la revendication 1, caractérisé en ce que la solution alcaline aqueuse d'aluminate de potassium, de lessive de potasse et de carbonate de potassium, présente :

a) un rapport molaire du $K_2O$, non lié sous forme de carbonate de potassium, à $Al_2O_3$ de 1,15 à 1,45,

b) une teneur en eau de dilution se situant dans le rapport molaire $H_2O : Al_2O_3$ compris entre 11 et 25, et

c) une teneur en $K_2CO_3$ de 0,1 à 5 moles %.

3. Béton à projeter selon la revendication 1 ou 2, caractérisé en ce qu'il contient l'accélérateur de la prise, présent en des quantités comprises entre 2,0 et 5,0 % en poids, sur la base de la teneur en liant.

4. Béton à projeter selon l'une des revendications 1 à 3, caractérisé en ce qu'il contient le fluidifiant du béton présent en des quantités comprises entre 0,2 et 3,0 % en poids, sur la base de la teneur en liant.

5. Béton à projeter selon l'une des revendications 1 à 4, caractérisé en ce qu'il présente un rapport eau/ciment compris entre 0,44 et 0,55.

6. Béton à projeter selon l'une des revendications 1 à 5, caractérisé en ce qu'il contient en outre jusqu'à 3,0 % en poids encore de silicates alcalins ou de $SiO_2$ fortement dispersé.

7. Procédé pour préparer du béton à projeter selon l'une des revendications 1 à 6, par introduction à l'aide d'une buse ou insufflation des additifs dans un système à pompe et de projection par pulvérisation d'un appareillage de projection de béton prévu sur le lieu d'utilisation du béton à projeter, procédé caractérisé en ce qu'on incorpore dans l'appareillage le fluidifiant du béton en amont de la conduite de transport et l'accélérateur de la prise en aval de la fin de la conduite de transport, en amont ou à l'intérieur de la buse de projection par pulvérisation.

**Revendication** (pour l'Etat contractant AT)

Procédé pour préparer du béton ouvrable à projeter, par insufflation ou introduction dans une buse de fluidifiants de béton et d'accélérateurs de la prise dans un système à pompe et à projection par

8

pulvérisation d'un appareillage de projection de béton prévu à l'endroit de l'utilisation et comportant le mélange générateur de béton y compris les granulats, procédé caractérisé en ce qu'on introduit les produits de condensation acide naphtalène sulfonique/formaldéhyde, à utiliser comme fluidifiants du béton, en amont de la conduite de transport et l'accélérateur de prise après la fin de la conduite de transport, en amont ou à l'intérieur de la buse de pulvérisation, dans l'appareillage, en utilisant comme accélérateur de la prise des solutions alcalines aqueuses fortement concentrées d'aluminate de potassium, d'hydroxyde de potassium et de carbonate de potassium, répondant aux conditions suivantes :

a) le rapport molaire du $K_2O$, non lié en forme de carbonate de potassium, et de $Al_2O_3$ se situe entre 1,1 et 1,6,

b) la teneur en eau comme solvant est dosée de façon que le rapport molaire $H_2O : Al_2O_3$ se situe entre 9,5 et 30, et

c) la teneur en carbonate de potassium se situe entre 0,1 et 6,0 moles %.